# EUROPEAN PATENT APPLICATION

(11) **EP 2 034 728 A1**
(43) Date of publication of application: **11.03.2009**
(21) Application number: 08700035.2
(22) Date of filing: 02.01.2008
(51) Int. Cl.: H04N 7/16

(54) **A SYSTEM, PROTECTING METHOD AND SERVER OF REALIZING VIRTUAL CHANNEL SERVICE**

(30) Priority: 17.04.2007 CN 200710098159
(71) Applicant: Huawei Technologies Co., Ltd., Longgang District, Shenzhen Guangdong 518129 (CN)
(72) Inventor: SUN, Chao, Guangdong 518129 (CN)
(74) Representative: Thun, Clemens
(86) International application number: PCT/CN2008/070008
(87) International publication number: WO 2008/125023

(57) **Abstract**

A system for implementing the virtual channel service generates an content key associated with each of the video on-demand (VOD) program contents for the each VOD program content multicast on a virtual channel, encrypts the VOD program contents by using the content key and multicasts the encrypted VOD program content on the virtual channel; generates a channel key for the virtual channel that multicasts the VOD program content, encrypts the content key and generates encryption information by using the channel key, and authorizes a user terminal that orders the virtual channel to the channel key, and multicasts the encryption information on the virtual channel. The user terminal that joins the virtual channel decrypts and obtains the content key by using the authorized channel key and then uses the content key to decrypt the encrypted content of the VOD program. Hence, it is necessary to encrypt the VOD program content once and store one corresponding encrypted program, thus saving storage resources of the system.

## Description

### Field of the Invention

The present invention relates to video on-demand (VOD) technologies, and in particular, to a system for implementing the virtual channel service, a protection method, an encryption server and a near VOD (NVOD) server.

### Background of the Invention

Near video on-demand (NVOD) was a cable TV service at its birth, where, as a cable TV network is unidirectional, a video server casts a program on multiple channels continuously but the program is started on each channel at a certain interval. A user may select a proper channel to watch the program at a desired progress.

As broadband network applications are popular, video on-demand (VOD) service is widely deployed in Internet Protocol Television or Interactive Personal Television (IPTV). With a VOD service, a user is able to specify the start time of a program freely and perform fast forwarding, fast rewinding and locating operations on an ongoing program so that the user can enjoy program contents freely anywhere at any time. VOD occupies a lot of network bandwidth. Each user sets up an independent unicast connection with the media server to receive a video program. Different users cannot share video program data packets transported over the network even though they are using the same service. When there are many users using the same service, network bandwidth resources will be wasted.

With reference to the NVOD service on a cable TV network, IPTV operators deploy a virtual channel service, which arranges a group of VOD programs in series based on a time sequence and pushes the programs to end users from a same address/port in multicast or broadcast mode. An entitled user terminal can receive video program data after joining the multicast group. The virtual channel service enables an operator to provide richer live channels.

For protection of the NVOD service, a conditional access system (CAS) is adopted in a traditional digital TV system to encrypt programs and control access of authorized users. The CAS is usually composed of an encryption subsystem and an authorization subsystem, where the encryption subsystem protects contents by means of encryption, generates an entitlement control message (ECM) stream for each encrypted program stream and delivers the ECM stream and the program stream together to users; the entitlement subsystem completes entitlement of users who order a program, generates an ECM for each user who orders the program and delivers the message to the users.

The IPTV system inherits the CAS protection method. A middleware acts as the IPTV control center to implement interactive control, user and service management, delivery of an electronic program guide (EPG), and integration of an operating support system(OSS) or a business support system (BSS).

In an IPTV system, protection of virtual channel programs includes the following steps:

1. The middleware defines a virtual channel as an NVOD product and requests to create a corresponding product number in the CAS and the CAS maintains a corresponding product key for the NVOD product.

2. The middleware requests the CAS to encrypt all VOD programs that join the virtual channel, and the CAS encrypts the VOD programs by using an encryption key (or the initial word of the encryption key) and generates an ECM, which includes the NVOD product number and information of the encryption key (or the initial word of the encryption key) encrypted by using the product key for the NVOD. The ECM is added to the VOD program packets and the CAS publishes the encrypted VOD program packets to the NVOD server.

3. The NVOD server organizes all VOD programs in the NVOD virtual channel program list into a virtual channel. The NVOD server also publishes encrypted packets of the VOD programs and the ECM to a specified multicast address according to a prearranged time sequence.

4. After a user orders the virtual channel, the middleware requests the CAS to entitle the user terminal to the virtual channel. The CAS generates a corresponding entitlement management message (EMM) for the user terminal. The EMM includes the product number and product key corresponding to the virtual channel.

5. When the user watches a program on the virtual channel, the set top box (STB) first joins the multicast group of the virtual channel in the bearer network to receive program packets and the ECM, and after obtaining the ECM for the program, the STB decrypts the encryption information of the corresponding product number in the ECM by using the corresponding NVOD product key so as to obtain the encryption key of virtual channel packets. The STB decrypts the received program packets by using the encryption key (or the initial word of the encryption key) to obtain plain-text packets and send the packets to the player for playing.

If different encryption keys are used for VOD programs that compose a virtual channel, during program switching, the terminal must also change the corresponding encryption key, which is complicated to implement. Therefore, the prior conditional access technology generally uses a same encryption key to encrypt all VOD programs multicast on one NVOD virtual channel when an NVOD product is published. As a result, one VOD program needs at least two encryptions, one for unicast of the VOD program and the other for multicast of the virtual channel. If the VOD program joins multiple NVOD virtual channels, there are more encrypted VOD program copies so that a large number of system storage resources are occupied.

### Summary of the Invention

Embodiments of the invention provide a system for implementing the virtual channel service, a protection method, an encryption server and a near video on-demand (NVOD) server for the purpose of resolving the problem in the prior NVOD virtual channel service that encrypted packets of a video on-demand (VOD) program copy after several encryptions occupy a large number of system storage resources.

For this purpose, embodiments of the invention provide the following technical solution:

A system for implementing the virtual channel service includes:

a VOD program content storage server;

a middleware, adapted to control the virtual channel service;

an encryption server, adapted to generate an content key associated with each of the VOD program contents for the each of the VOD program contents in the content storage server according to a virtual channel service control signal sent by the middleware, encrypt content of each of the VOD programs associated with the content key according to the content key, and output an encrypted VOD program content, and adapted to generate a channel key for a virtual channel that multicasts the contents of VOD programs, encrypt the content key by using the channel key, and output encryption information of the content key, and authorize a user terminal that orders the virtual channel to the channel key;

a VOD server, adapted to receive and publish the encrypted VOD program content; and

an NVOD server, adapted to receive the encryption information of the content key, obtain the encrypted VOD program content from the VOD server, and multicast the encrypted VOD program content and the encryption information of the content key on the virtual channel.

An encryption server includes:

a program content obtaining unit, adapted to obtain video on-demand (VOD) program contents from a content storage server that stores VOD program contents;

a program content encrypting unit, adapted to generate an content key associated with each of the obtained VOD program contents for the each of the obtained VOD program contents and encrypt a VOD program content associated with the content key according to the content key;

a VOD program content publishing unit, adapted to publish the encrypted VOD program content generated by the program content encrypting unit to a VOD server;

a content key encrypting unit, adapted to generate a channel key for a virtual channel that multicasts the VOD program contents, encrypt the content key generated by the program content encrypting unit by using the channel key, and generate encryption information of the content key, where the encryption information of the content key includes the encrypted content key and program control information; and

a channel key entitling unit, adapted to entitle a user terminal that orders the virtual channel to the channel key of the virtual channel generated by the content key encrypting unit.

The encryption server further includes a first multicast control unit, adapted to obtain the encrypted VOD program content from the VOD server, obtain the encryption information of the content key from the content key encrypting unit, and multicast the encrypted VOD program content and the encryption information of the content key on the virtual channel.

Alternatively, the encryption server further includes a second multicast control unit, adapted to obtain the encrypted VOD program content from the program content encrypting unit, obtain the encryption information of the content key from the content key encrypting unit, and multicast the encrypted VOD program content and the encryption information of the content key on the virtual channel.

An NVOD server includes:

an encryption information obtaining unit, adapted to obtain encryption information of a content key of a VOD program content from an encryption server;

a VOD program content obtaining unit, adapted to obtain an encrypted VOD program content from a VOD server; and

a multicast control unit, adapted to multicast the encrypted VOD program content and the encryption information of the content key on a virtual channel.

A method for protecting the virtual channel service includes:

generating a content key associated with each video on-demand (VOD) program content for the each VOD program content, encrypting the each VOD program content by using the content key associated with the each VOD program content, and multicasting the encrypted VOD program content on a virtual channel; and

generating a channel key for the virtual channel, encrypting the content key by using the channel key, and authorizing a user terminal that orders the virtual channel to the channel key, and multicasting encryption information of the content key to the user terminal.

A method for implementing the virtual channel service includes:

generating an associated content key respectively for each VOD program content, using each content key to encrypt an associated VOD program content respectively, and multicasting the encrypted VOD program content on a virtual channel;

generating a channel key for the virtual channel, using the channel key to encrypt each content key, and entitling a user terminal that orders the virtual channel to the channel key, and multicasting encryption information of the content key to the user terminal; and

decrypting, by the user terminal, the received encryption information by using the entitled channel key to obtain the content key of the encrypted VOD program content; and decrypting the encrypted VOD program content received after joining a virtual channel multicast group by using the obtained content key.

The technical solution provided by embodiments of the invention generates a unique associated content key for each VOD program that needs to be multicast on the virtual channel, encrypts the associated VOD program by using the content key and saves the encrypted packets of the VOD program for multicast on the virtual channel. The solution also generates a channel key for the virtual channel of the VOD program, entitles a user terminal that requests the virtual channel to the channel key, and multicasts the content key encrypted using the channel key while multicasting encrypted packets of the VOD program on the virtual channel. Thus, the user terminal that joins the virtual channel decrypts and obtains the content key by using the entitled channel key and then uses the content key to decrypt the encrypted packets of the VOD program. When the VOD program is multicast on different virtual channels, the content key of the VOD program is sent to the entitled user terminal by using the channel key of each virtual channel so as to realize the protection required by the virtual channel service. With the method for implementing the virtual channel service provided by embodiments of the invention, it is necessary to perform only one encryption for a VOD program and store the encrypted packets of only one VOD program copy, thus saving storage resources of the system.

### Brief Description of the Drawings

Figure 1 shows the structure of a system for implementing the virtual channel service with an encryption server according to an embodiment of the invention;

Figure 2 shows the main structure of an encryption server according to an embodiment of the invention;

Figure 3 shows the main structure of an NVOD server according to an embodiment of the invention;

Figure 4 shows the structure of a system for implementing the virtual channel service with an NVOD server according to an embodiment of the invention; and

Figure 5 and Figure 6 respectively show the main structure of an NVOD server according to two different embodiments of the invention.

### Detailed Description of the Invention

An embodiment of the invention provides a method for implementing the virtual channel service which encrypts NVOD programs. The method generates a unique associated content key for each VOD program that needs to be multicast on the virtual channel, encrypts the associated VOD program by using the content key, and saves the encrypted contents of the VOD program to generate encrypted packets, and multicasts the encrypted packets on the virtual channel; the method also generates a channel key for the virtual channel that multicasts the VOD program, entitles a user terminal that requests the virtual channel to the channel key, multicasts the encrypted contents of the VOD program on the virtual channel and multicasts the content key that is encrypted using the channel key. In this way, a user terminal that joins the virtual channel uses the entitled channel key to decrypt and obtain the content key and uses the content key to decrypt the encrypted VOD program packets received from the multicast group of the virtual channel.

With the method for implementing the virtual channel service provided by the embodiment of the invention, it is necessary to encrypt a VOD program only once and save the encrypted program contents of only one program copy. When the VOD program is multicast on different virtual channels, the content key of the VOD program is sent to entitled user terminals by using the channel keys of corresponding virtual channels so as to implement protection required by the virtual channel service.

A special encryption server may be adopted to generate the keys and realize the encryption and entitlement operations. The encryption server may be placed in a prior digital rights management (DRM) system or functions of the encryption server may be integrated into a server already operating in the DRM system; or functions of the encryption server may be implemented by an NVOD server. The following description assumes that the encryption server is placed in the DRM system.

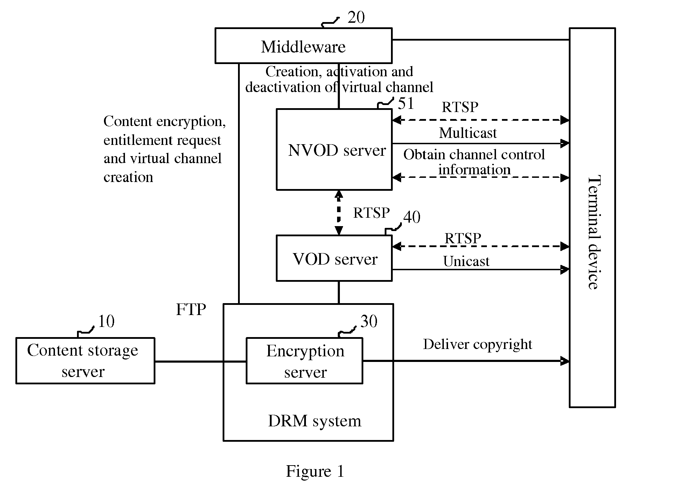

As shown in Figure 1, a system for implementing the virtual channel service according to an embodiment of the invention includes:

a content storage server 10, adapted to store VOD program packets, each VOD program corresponding to a content ID;

a middleware 20, adapted to control content encryption, user entitlement, and creation, activation and deactivation of a virtual channel;

an encryption server 30, placed in a DRM system and adapted to execute encryption, key maintenance and entitlement functions;

a VOD server 40, adapted to unicast VOD programs, and unicast a VOD program to a user terminal after the user terminal sets up a unicast connection with the VOD server 40 via the Real Time Streaming Protocol (RTSP); and

an NVOD server 51, adapted to multicast VOD programs on a created virtual channel, where a user terminal joins the virtual channel multicast group provided by the NVOD server 51 via RTSP to receive the multicast VOD program packets.

The following takes the creation and activation of a virtual channel for example to detail the functions of each functional entity:

1. The middleware requests the encryption server to encrypt VOD programs that require protection; the encryption server generates and maintains a content ID and a content key pair for each VOD program that requires protection, obtains a VOD program that requires protection from the content storage server and encrypts the VOD program by using the content key, and publishes the encrypted program contents of the VOD program to the VOD server.

The content IDs and content key pairs maintained by the encryption server are shown in Table 1:

**Table 1**

| SN | Content ID | Content Key |
|---|---|---|
| 1 | Content ID 1 | Content key 1 |
| 2 | Content ID 2 | Content key 2 |
| ... | ... | ... |
| N | Content ID N | Content key N |

2. The middleware creates a virtual channel and assigns a channel identification (channel ID) to the virtual channel, and requests the encryption server to create a virtual channel with the channel ID and generate and maintain the channel ID and the corresponding channel key via an interface between the middleware and the encryption server.

The channel IDs and corresponding channel keys are shown in Table 2:

**Table 2**

| SN | Channel ID | Channel Key |
|---|---|---|
| 1 | Channel ID 1 | Channel key 1 |
| 2 | Channel ID 2 | Channel key 2 |
| ... | ... | ... |
| N | Channel ID N | Channel key N |

The procedure where the middleware creates a virtual channel includes the following steps:

(1) The middleware assigns a channel ID;

(2) The middleware sends a virtual channel creation request to the encryption server, the message carrying the channel ID parameter;

(3) The encryption server receives the request, assigns a channel key to the channel ID and saves a map between the channel ID and the channel key; and

(4) The encryption server sends a virtual channel creation success response to the middleware.

3. The middleware requests the encryption server to add a group of VOD programs to the specified virtual channel; the encryption server encrypts the content key of every program in the VOD program group by using the channel key corresponding to the channel ID of the virtual channel to generate channel encryption information and sends the channel encryption information to the middleware.

The channel encryption information includes the content key of each VOD program encrypted using the channel key, validity of the channel encryption information (defined by start time and end time), and the access control condition of each VOD program. For example, if the virtual channel group includes four VOD programs, specific contents of the channel encryption information are described in Table 3. For easy extension, the type/length/value (TLV) encoding scheme may be used.

**Table 3**

| | | |
|---|---|---|
| Encryption information of the content key of the first VOD program encrypted using the channel key (Content Encryption Key 0) | | |
| Encryption information of the content key of the second VOD program encrypted using the channel key (Content Encryption Key 1) | | |
| Encryption information of the content key of the third VOD program encrypted using the channel key (Content Encryption Key 2) | | |
| Encryption information of the content key of the fourth VOD program encrypted using the channel key (Content Encryption Key 3) | | |
| Time when the channel encryption information becomes valid (Start Time) | | |
| Time when the channel encryption information becomes invalid (End Time) | | |
| Parent Rate | Area Code | Fingerprint Etc. |
| Message Authentication Code (MAC) | | |

4. The middleware sends to the NVOD server a request for activating the specified virtual channel; the activation request includes a list of VOD programs to be cast on the specified virtual channel and the channel encryption information corresponding to the VOD programs.

The program list includes related information of all VOD programs to be cast on the virtual channel and schedule information of the VOD programs. The related information of each VOD program includes a content ID, the access address of the description file of the VOD program and the program attribute.

5. After the virtual channel is activated, the NVOD server sets up connections with the VOD server respectively according to the related information of VOD programs in the VOD program list to obtain the encrypted program contents of each VOD program encrypted by the content key, generates encrypted packets by using the encrypted program contents, and publishes the encrypted packets and the channel encryption information to the multicast group of the virtual channel.

6. When activating the virtual channel, the NVOD server publishes the channel encryption information and the program stream corresponding to each VOD program to the bearer network.

The channel encryption information of a VOD program may be published in either of the following methods:

(1) Sending channel encryption information separately, that is, publishing Real-time Transport Protocol (RTP) packets that carry channel encryption information of a VOD program as a control stream to a specified port of the channel control information multicast address. In this method, the NVOD needs to publish the channel control information multicast address and port to a terminal and publish the channel encryption information and the encrypted packets corresponding to VOD program contents together to the bearer network in advance. The terminal needs to obtain the multicast address and port in advance.

(2) Appending the channel encryption information of the specified program to each encrypted packet to form a new channel program packet and publish the new packet to the channel multicast group.

The NVOD server may first obtain the encrypted program contents of each VOD program and cast the programs one by one according to the NVOD program list in step 5, or the NVOD server may select the next VOD program according to the NVOD program list after one VOD program is finished and then steps 5 and 6 are repeated.

7. After a user orders the virtual channel from the middleware, the middleware requests the encryption server to entitle the user terminal to the virtual channel. The encryption server generates entitlement information corresponding to the user terminal and sends the entitlement information to the user terminal. The entitlement information includes the channel ID, the virtual channel key, and the access condition of the virtual channel.

8. When the user is watching programs on the virtual channel:

corresponding to the first method in which channel encryption information is sent separately:

(1) The user terminal first obtains the multicast address of the control stream and then joins the channel control information multicast group of the virtual channel to receive encryption information of the virtual channel according to the multicast address of the control stream, and queries whether corresponding entitlement information exists by using the channel ID, and if the entitlement information exists, the user terminal decrypts the channel encryption information by using the channel key to obtain the content key of the VOD program.

(2) The user terminal receives encrypted packets of the VOD program multicast on the virtual channel, decrypts the encrypted packets by using the content key of the VOD program and then sends the decrypted plain-text packets to a player for playing.

Corresponding to the second method in which the channel encryption information and encrypted program packets are sent, where the user joins the multicast group of the virtual channel to receive packets of channel programs one by one:

(1) The user terminal obtains channel encryption information from each channel program packet, queries whether corresponding entitlement information exists by using the channel ID and if the entitlement information exists, the user terminal decrypts the channel encryption information by using the channel key to obtain the content key of the VOD program.

(2) The user terminal decrypts each encrypted packet by using the content key of the VOD program and sends the decrypted plain-text packets to a player for playing.

Before the validity of the current channel encryption information expires, the next channel encryption information is requested from the NVOD server.

Interfaces described in Table 4 are required between the middleware and the encryption server:

**Table 4**

| Interface | Description |
|---|---|
| Encrypting a VOD program | The middleware initiates a request to the encryption server; the encryption server encrypts the VOD program, maintains a map between the content ID and the content key of the VOD program, and responds to the middleware with a program encryption result. |
| Creating a virtual channel | The middleware initiates a request to the encryption server; the encryption server responds with a virtual channel creation result. |
| Adding a VOD program to a virtual channel | |
| Entitlement request | The middleware requests the encryption server to entitle the specified user to the virtual channel. |

Interfaces described in Table 5 are required between the middleware and the NVOD server:

**Table 5**

| Interface | Description |
|---|---|
| Creating a virtual channel | The middleware initiates a request to the NVOD server; the NVOD server responds with a virtual channel creation result. |
| Activating a virtual channel 1 | The middleware requests the NVOD to start casting the virtual channel programs. |
| Deactivating a virtual channel 1 | The middleware requests the NVOD to stop casting the virtual channel programs. |

An interface described in Table 6 is required between the NVOD server and the user terminal:

**Table 6**

| Interface | Description |
|---|---|
| Obtaining channel encryption information | The terminal obtains the channel encryption information of all VOD channels from the NVOD server. |

The keys, encrypted program contents and encryption information are generated by the encryption server. The NVOD server only transports the information without decryption. Moreover, the information transferred between the NVOD server and the middleware and the VOD server is also encrypted. This satisfies the needs of VOD program protection and assures good security.

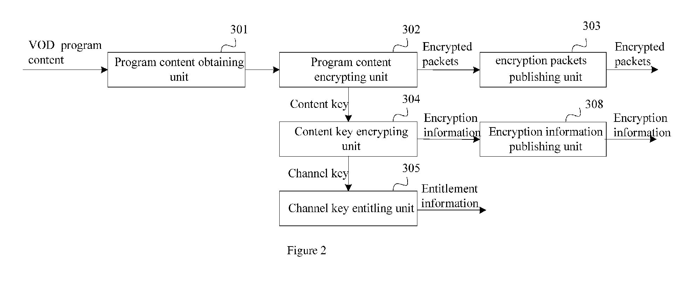

As shown in Figure 2, an encryption server provided by an embodiment of the invention includes:

a program content obtaining unit 301, adapted to obtain contents of a VOD program from a VOD content storage server;

a program content encrypting unit 302, adapted to generate an associated content key for each VOD program content and encrypt an associated VOD program content according to each content key to generate encrypted packets of the VOD program content;

an encryption packets publishing unit 303, adapted to publish the encrypted program content generated by the program content encrypting unit 302 to a VOD server;

a content key encrypting unit 304, adapted to generate a channel key for a virtual channel that multicasts the VOD program content and encrypt the content key generated by the program content encrypting unit 302 by using the channel key; and

a channel key entitling unit 305, adapted to entitle a user terminal that orders the virtual channel to the channel key of the virtual channel generated by the content key encrypting unit 304.

The program content encrypting unit 302 and the content key encrypting unit 304 may be combined.

Further, the encryption server may include:

an encryption information publishing unit 308, adapted to publish encryption information of the content key generated by the program content encrypting unit 302 to the middleware. If the encryption server and the NVOD server are combined, encryption information may be stored locally and the encryption information publishing unit 308 is not required.

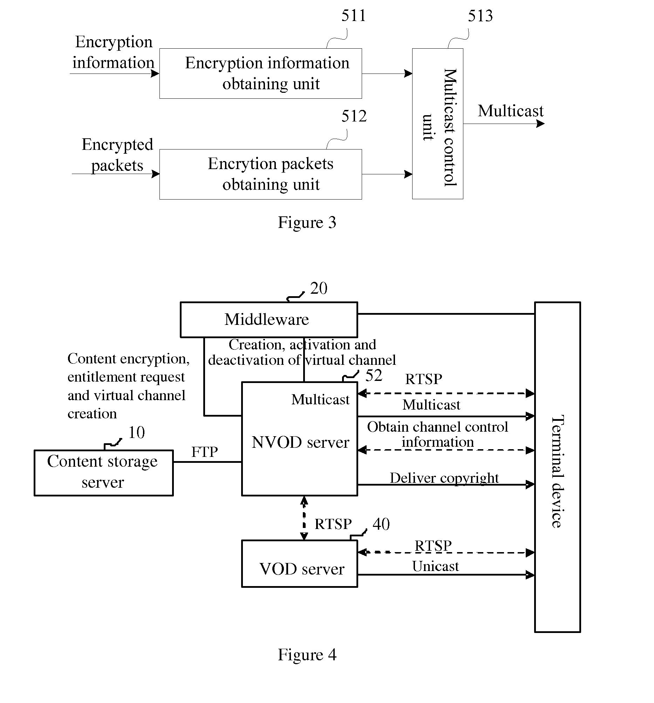

As shown in Figure 3, an NVOD server provided in an embodiment of the invention includes:

an encryption information obtaining unit 511, adapted to obtain encryption information of a content key from an encryption server;

an encryption packets obtaining unit 512, adapted to obtain an encrypted VOD program content from a VOD server; and

a multicast control unit 513, adapted to multicast the encrypted packets of the VOD program content and the encryption information of the content key on a virtual channel.

When an encryption server is adopted to protect IPTV services in embodiments of the invention, the VOD server stores the encrypted program contents of only one program copy, thus saving the storage resources of the system.

The following describes how an NVOD server is utilized to protect an NVOD virtual channel in detail, where the NVOD server generates keys and executes encryption and entitlement operations.

Figure 4 shows a system for implementing the virtual channel service in an embodiment of the invention, where an NVOD server is adopted to encrypt NVOD programs, which is equivalent to the effect that an encryption server is integrated with the NVOD server. The system includes:

a content storage server 10, a middleware 20 and a VOD server 40, and further includes an NVOD server 52, where:

the NVOD server 52 is adapted to execute encryption, key maintenance and entitlement functions and multicast encrypted packets of VOD programs and encryption information of content keys on a created virtual channel; a terminal device joins the virtual channel multicast group provided by the NVOD server 52 to receive encrypted multicast packets and obtain encryption information of content keys from the NVOD server 52.

The following takes the creation and activation of a virtual channel for example to detail the functions of each functional entity:

1. The middleware requests the NVOD server to encrypt VOD programs that require protection; the NVOD server generates and maintains a content ID and a content key pair for each VOD program that requires protection, obtains a VOD program that requires protection from the content storage server and encrypts the VOD program by using the content key, and publishes the encrypted program contents of the VOD program to the VOD server.

2. The middleware creates a virtual channel and assigns a channel ID to the virtual channel, and requests the NVOD server to create a virtual channel with the channel ID and maintain the channel ID and the corresponding channel key via an interface between the middleware and the NVOD server.

3. The middleware requests the NVOD server to add a group of VOD programs to the specified virtual channel; the NVOD server encrypts the content key of each program in the VOD program group by using the channel key corresponding to the channel ID of the virtual channel to generate channel encryption information, saves the channel encryption information of the virtual channel and returns a response to the middleware.

4. The middleware sends to the NVOD server a request for activating the specified virtual channel; the activation request includes the channel ID and the list of VOD programs to be cast on the virtual channel.

5. The NVOD server activates the virtual channel and sets up connections with the VOD server respectively according to related information of VOD programs in the VOD program list to obtain encrypted program contents of each VOD program encrypted by the content key.

6. While activating the virtual channel, the NVOD server publishes the encrypted packets and channel encryption information to the multicast group of the virtual channel.

There are two methods for publishing the channel encryption information of a VOD program: one is to send channel encryption information separately; the other is to append the channel encryption information of the specified program to each encrypted packet to form a new channel program packet and publish the new packet to the channel multicast group.

The NVOD server may first obtain the encrypted program contents of each VOD program and cast the programs one by one according to the NVOD program list in step 5, or the NVOD server may select the next VOD program according to the NVOD program list after one VOD program is finished and then repeat steps 5 and 6.

7. After a user orders the virtual channel, the middleware requests the NVOD server to entitle the user terminal to the virtual channel. The NVOD server generates entitlement information corresponding to the user terminal and sends the entitlement information to the user terminal. The entitlement information includes the channel ID, the virtual channel key, and the access condition of the virtual channel.

8. When the user is watching programs on the virtual channel,

corresponding to the method for publishing channel encryption information, an appropriate mode is used to obtain the content key of the VOD program content, decrypt the encrypted packets received after joining the multicast group and send the decrypted plain-text packets to a player for playing.

In another embodiment of the invention, the NVOD server may store encrypted program contents of a VOD program locally and after the virtual channel is activated, the NVOD server obtains the encrypted program contents of the VOD program directly from the local storage for multicast.

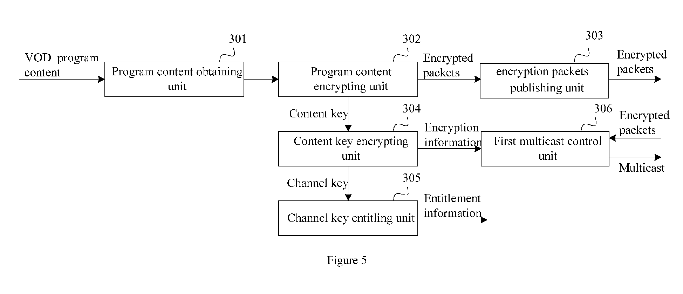

Figure 5 shows an NVOD server provided in an embodiment of the invention. In addition to all the functional units of the encryption server shown in Figure 3, the NVOD server further includes:

a first multicast control unit 306, adapted to obtain encrypted program contents of each VOD program from the VOD server, obtain encryption information of each content key from the content key encrypting unit 304, and multicast the encrypted packets of VOD program contents and encryption information of content keys on a virtual channel.

The NVOD server shown in Figure 5 does not need to store encrypted program contents of a VOD program locally. Instead, when the virtual channel is activated, the NVOD server obtains encrypted program contents of VOD programs that need to be multicast from the VOD server where encrypted program contents of VOD programs are published.

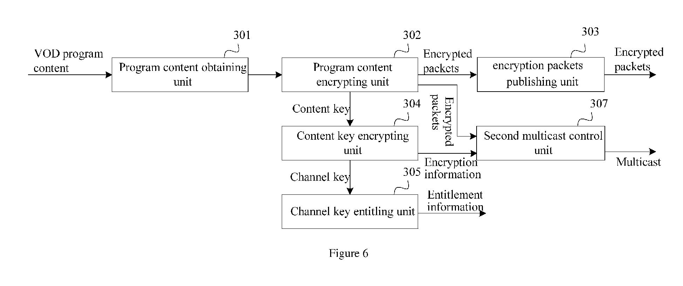

Figure 6 shows an NVOD server provided in another embodiment of the invention. In addition to all the functional units of the encryption server shown in Figure 3, the NVOD server further includes:

a second multicast control unit 307, adapted to obtain encrypted program contents of each VOD program from the program content encrypting unit 302, obtain encryption information of each content key from the content key encrypting unit 304, and multicast the encrypted packets of VOD program contents and encryption information of content keys on a virtual channel.

The NVOD server shown in Figure 6 needs to store encrypted program contents of VOD programs locally so as to obtain encrypted program contents of VOD programs that need to be multicast from the local storage after the virtual channel is activated.

To sum up, the technical solution provided by embodiments of the invention generates a unique associated content key for each VOD program that needs to be multicast on a virtual channel, encrypts the associated VOD program by using the content key and saves the encrypted program contents of the VOD program for generating encrypted packets to be multicast on the virtual channel. The solution also generates a channel key for the virtual channel of the VOD program, entitles a user terminal that requests the virtual channel to the channel key, and multicasts the content key encrypted using the channel key while multicasting encrypted packets of the VOD program on the virtual channel. Thus, the user terminal that joins the virtual channel decrypts and obtains the content key by using the entitled channel key and then uses the content key to decrypt the encrypted packets of the VOD program. When the VOD program is multicast on different virtual channels, the content key of the VOD program is sent to the entitled user terminal by using the channel key of each virtual channel so as to realize the protection required by the virtual channel service. With the method for implementing the virtual channel service provided by embodiments of the invention, it is necessary to perform only one encryption for a VOD program and store the encrypted program contents of only one VOD program copy, thus saving storage resources of the system.

Although the technical solution of the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A system for implementing the virtual channel service, comprising a content storage server adapted to store video on-demand (VOD) program contents and further comprising:
a middleware, adapted to control the virtual channel service;
an encryption server, adapted to generate an content key associated with each of the VOD program contents for the each of the VOD program contents in the content storage server according to a virtual channel service control signal sent by the middleware, encrypt content of each of the VOD programs associated with the content key according to the content key, and output an encrypted VOD program content, and adapted to generate a channel key for a virtual channel that multicasts the contents of VOD programs, encrypt the content key by using the channel key, and output encryption information of the content key, and authorize a user terminal that orders the virtual channel to the channel key;
a VOD server, adapted to receive and publish the encrypted VOD program content; and
a near video on-demand (NVOD) server, adapted to receive the encryption information of the content key, obtain the encrypted VOD program content from the VOD server, and multicast the encrypted VOD program content and the encryption information of the content key on the virtual channel.

2. The system of claim 1, wherein the encryption server is placed in a digital rights management (DRM) system.

3. The system of claim 2, wherein the middleware is located between the encryption server and the NVOD server; and the DRM system sends the encryption information to the middleware, and the middleware forwards the encryption information to the NVOD server.

4. The system of claim 1, wherein the encryption server and the NVOD server are combined.

5. An encryption server, comprising:
a program content obtaining unit, adapted to obtain video on-demand (VOD) program contents from a content storage server that stores VOD program contents;
a program content encrypting unit, adapted to generate an content key associated with each of the obtained VOD program contents for the each of the obtained VOD program contents and encrypt a VOD program content associated with the content key according to the content key;
a VOD program content publishing unit, adapted to publish the encrypted VOD program content generated by the program content encrypting unit to a VOD server;
a content key encrypting unit, adapted to generate a channel key for a virtual channel that multicasts the VOD program contents, encrypt the content key generated by the program content encrypting unit by using the channel key, and generate encryption information of the content key; and
a channel key entitling unit, adapted to entitle a user terminal that orders the virtual channel to the channel key of the virtual channel generated by the content key encrypting unit.

6. The encryption server of claim 5, further comprising:
a first multicast control unit, adapted to obtain the encrypted VOD program content from the VOD server, obtain the encryption information from the content key encrypting unit, and multicast the encrypted VOD program content and the encryption information on the virtual channel.

7. The encryption server of claim 5, further comprising:
a second multicast control unit, adapted to obtain the encrypted VOD program content from the program content encrypting unit, obtain the encryption information from the content key encrypting unit, and multicast the encrypted VOD program content and the encryption information on the virtual channel.

8. The encryption server of claim 6 or 7, wherein the encryption server is placed in a near video on-demand (NVOD) server.

9. The encryption server of claim 5, wherein the program content encrypting unit and the content key encrypting unit are combined.

10. A near video on-demand (NVOD) server, comprising:
an encryption information obtaining unit, adapted to obtain encryption information of a content key of a video on-demand (VOD) program content from an encryption server;
a VOD program content obtaining unit, adapted to obtain an encrypted VOD program content from a VOD server; and
a multicast control unit, adapted to multicast the encrypted VOD program content and the encryption information on a virtual channel.

11. A method for protecting the virtual channel service, comprising:
generating a content key associated with each video on-demand (VOD) program content for the each VOD program content, encrypting the each VOD program content by using the content key associated with the each VOD program content, and multicasting the encrypted VOD program content on a virtual channel; and
generating a channel key for the virtual channel, encrypting the content key by using the channel key, and authorizing a user terminal that orders the virtual channel to the channel key, and multicasting encryption information of the content key to the user terminal.

12. The method of claim 11, wherein the method for multicasting the encryption information of the content key to the user terminal comprises:
multicasting the encryption information of the content key and the encrypted VOD program content together; or
multicasting the encryption information of the content key in a virtual channel control information multicast group.

13. A method for implementing the virtual channel service, comprising:
generating an associated content key respectively for each video on-demand (VOD) program content, using each content key to encrypt an associated VOD program content respectively, and multicasting the encrypted VOD program content on a virtual channel;
generating a channel key for the virtual channel, using the channel key to encrypt each content key, and entitling a user terminal that orders the virtual channel to the channel key, and multicasting encryption information of the content key to the user terminal; and
by the user terminal, decrypting the received encryption information by using the entitled channel key to obtain the content key of the encrypted VOD program content; and decrypting the encrypted VOD program content received after joining a virtual channel multicast group by using the obtained content key.

14. The method of claim 13, wherein the method for multicasting the encryption information of the content key to the user terminal comprises:
multicasting the encryption information of the content key and the encrypted VOD program content together; or
multicasting the encryption information of the content key in a virtual channel control information multicast group.
